# EUROPEAN PATENT SPECIFICATION

(11) **EP 3 850 800 B1**
(45) Date of publication and mention of the grant of the patent: **08.01.2025**
(21) Application number: 19871458.6
(22) Date of filing: 08.10.2019
(51) Int. Cl.: H04L 45/302

(54) **METHOD AND SYSTEM FOR FORWARDING DATA PACKETS IN A SERVICE FUNCTION PATH OF A NETWORK**
VERFAHREN UND SYSTEM ZUR WEITERLEITUNG VON DATENPAKETEN IN EINEM DIENSTFUNKTIONSWEG EINES NETZWERKS
PROCÉDÉ ET SYSTÈME DE TRANSFERT DE PAQUETS DE DONNÉES DANS UN TRAJET DE FONCTIONS DE SERVICE D'UN RÉSEAU

(30) Priority: 08.10.2018 IN 201841038155; 03.10.2019 IN 201841038155
(43) Date of publication of application: 21.07.2021
(73) Proprietor: Samsung Electronics Co., Ltd., Suwon-si, Gyeonggi-do 16677 (KR)
(72) Inventor: THORAT, Pankaj Bhimrao, Bangalore Karnataka 560037 (IN); SHARAN, Rohit, Bangalore Karnataka 560037 (IN)
(74) Representative: Gulde & Partner
(86) International application number: PCT/KR2019/013218
(87) International publication number: WO 2020/076061

(56) References cited:
- KR-A- 20160 150 059
- US-A1- 2017 134 275
- US-A1- 2017 214 613
- US-A1- 2018 083 865
- US-A1- 2018 159 801
- BOTTORFF D FEDYK HP ENTERPRISE H ASSARPOUR BROADCOM P: "Ethernet MAC Chaining; draft-fedyk-sfc-mac-chain-01.txt", ETHERNET MAC CHAINING; DRAFT-FEDYK-SFC-MAC-CHAIN-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 20 January 2016 (2016-01-20), pages 1 - 23, XP015110750
- HAJAR HANTOUTI ET AL.: "A Novel Compact Header for Traffic Steering in Service Function Chaining", 2018 IEEE INTERNATIONAL CONFERENCE ON COMMUNICATIONS (ICC, 31 July 2018 (2018-07-31), XP033378582

## Description

### Technical Field

The present disclosure relates to a network communication and management and Software Defined Networking (SDN) system. More particularly, but not exclusively, the subject matter is related to a method and system for forwarding data packets in a service function path of a network.

### Background Art

To meet the demand for wireless data traffic having increased since deployment of 4^{th} generation (4G) communication systems, efforts have been made to develop an improved 5^{th} generation (5G) or pre-5G communication system. Therefore, the 5G or pre-5G communication system is also called a `Beyond 4G Network' or a `Post Long Term Evolution (LTE) System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid frequency shift keying (FSK) and quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

Delivery of end-to-end services often requires various service functions such as, traditional network service functions for example, firewalls and traditional IP Network Address Translators (NATs), as well as application-specific functions such as, content filtering and video optimizer. In data communication networks, Service Function Chaining (SFC) and service function forwarding can be used for forwarding data packets along a predetermined Service Function Path (SFP) through the network. Generally, architecture of the SFC is built out of logical components which are for example, classifiers, Service Function Forwarders (SFFs) and the like. The SFP is realized by configuring an SFC data plane components based on the policy of the network services (NS). Typically, the SFC pushes traffic classification rules into the SFC classifier, which then distinguishes and labels an incoming flow with a unique path ID featuring a set of Service Functions (SFs) each flow must traverse. The SFC classifier can be placed at the ingress edge node. Based on the SFC rule configured, an SFF forwards the incoming flows to an attached service node hosting SF or to other SFFs.

Existing data forwarding methods are usually based on VLAN based approach, label-based approach, NSH based approach, destination MAC change approach and the like. These existing methods require special header (such as, VLAN, NSH) for forwarding packets on the SFP. This increases packet processing delay overhead, packet size and ultimately traffic volume. Also, existing methods involve complication due to looping of data packets on the SFP. Further, the data packets are classified at various levels in existing approach, leading to multiple forwarding rules for the SFC.

A prior art publication of BOTTORFF D FEDYK HP ENTERPRISE H ASSARPOUR BROADCOM P: "Ethernet MAC Chaining; draft-fedyk-sfc-mac-chain-01.txt", ETHERNET MAC CHAINING; DRAFT-FEDYK-SFC-MAC-CHAIN-01.TXT, INTERNET ENGINEERING TASK FORCE, IETF; STANDARD WORKINGD RAFT, INTERNET SOCIETY (ISOC) 4, RUE DES FALAISES CH- 1205 GENEVA, SWITZERLAND, 20 January 2016 discloses Service Function Chaining (SFC) that enables the creation of composite (network) services that consist of a directed graph of Service Functions (SF) which must be applied to packets selected as a result of classification.

Additionally, US 2017/214613 A1 describes a method for service function chaining across subnetworks includes receiving a packet at a virtual switch integration bridge from a first service function (SF) that is in a service function chain (SFC) and that is on a first subnetwork.

The information disclosed in this background of the disclosure section is only for enhancement of understanding of the general background of the invention and should not be taken as an acknowledgement or any form of suggestion that this information forms the prior art already known to a person skilled in the art.

### Disclosure of Invention

### Solution to Problem

In an embodiment, the present disclosure may relate to a method for forwarding data packets in a service function path of a network as defined in the appended claims.

In an embodiment, the present disclosure may relate to a packet forwarding system for forwarding data packets in a service function path of a network as defined in the appended claims.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of Drawings

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Figure.1A** illustrates an exemplary block diagram of a packet forwarding system for forwarding data packets in a service function path of a network in accordance with some embodiments of the present disclosure;
**Figure.1B** illustrates an exemplary representation of service function path for forwarding data packet in a network in accordance with some embodiments of the present disclosure;
**Figure.2A** illustrates a detailed block diagram of a packet forwarding system in accordance with some embodiments of the present disclosure;
**Figure.2B** illustrates exemplary source MAC address formats in accordance with some embodiments of the present disclosure;
**Figure. 3** illustrates an exemplary embodiment of assigning priorities for forwarding the data packets in the network;
**Figure.4** illustrates a flowchart showing a method for forwarding data packets in a service function path in accordance with some embodiments of present disclosure;
**Figure.5** illustrates an exemplary graph depicting comparison between different packet forwarding approaches in accordance with some embodiments of the present disclosure; and
**Figure.6** illustrates a block diagram of an exemplary system for the implementation of embodiments consistent with the present disclosure.

It should be appreciated by those skilled in the art, that any block diagrams herein represent conceptual views of illustrative systems embodying the principles of the present subject matter. Similarly, it will be appreciated that any flow charts, flow diagrams, state transition diagrams, pseudo code, and the like represent various exaggerated processes which may be more effectively represented in computer readable medium and executed by a computer or processor, whether or not a computer or processor is explicitly shown.

### Best Mode for Carrying Out the Invention

Embodiments of the present disclosure relate to packet-based data communications and service function forwarding.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiments thereof have been shown by way examples in the drawings and will be described in detail below. It should be understood that drawings and detailed descriptions are not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover non-exclusive inclusions, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In the following detailed description of the embodiments of the disclosure, reference is made to the accompanying drawings that form a part hereof, and in which are shown by way of illustration specific embodiments in which the disclosure may be practiced. These embodiments are described in sufficient detail, which should enable those skilled in the art to practice the disclosure, and it is to be understood that other embodiments may be utilized and that changes may be made without departing from the scope of the present disclosure. The following description is, therefore, not to be taken in any limiting sense.

Embodiments of the present disclosure relates to a method and a packet forwarding system for forwarding data packets in a service function path of a network. In an embodiment, the service function path may refer a predefined logical path of service function for data forwarding with no regard of network topologies or transport mechanisms. Generally, forwarding of data packets currently require addition special headers such as, Virtual Local Area Network (VLAN), Network Service Header (NSH) and the like. This adds to additional processing and makes forwarding technique less effective. Thus, the present disclosure in such case discloses a data packet forwarding approach, wherein a source MAC address of incoming data packets is altered or modified by appending a service function chain identification number (SFC_ID) and a service function index value. The data packets with modified source MAC address are transmitted in the service function path. While forwarding the data packets, the service function index value in the modified source MAC address of each data packet is decremented by one count at each of a plurality of service function forwarders associated with the packet forwarding system. Thereafter, the data packets are transmitted to destined host. The present disclosure provides a proactive approach of forwarding data packets and eliminates looping issues and overhead from special headers.

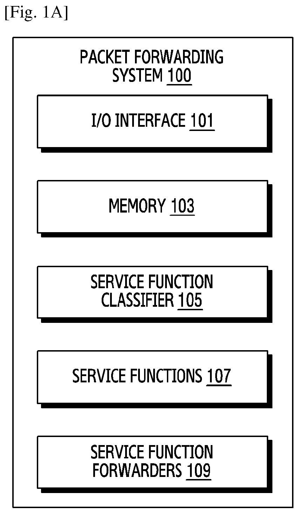

**Figure.1A** illustrates an exemplary block diagram of a packet forwarding system for forwarding data packets in a service function path of a network in accordance with some embodiments of the present disclosure. Specifically, Figure. 1A illustrates a packet forwarding system 100. The packet forwarding system 100 includes an Input/Output (I/O) interface 101, a memory 103 for storing instructions and data. The I/O interface 101 is coupled with other components of the packet forwarding system 100 through which an input signal and/or an output signal is communicated. The packet forwarding system 100 may be used for forwarding and transmitting data packets in the service function path of a network. The packet forwarding system 100 includes a service function classifier 105, service functions 107 and service function forwarders 109. The service function classifier 105 is a component which performs data packet classification for incoming traffic and directs matched traffic to service function path. In an embodiment, the service functions 107 are those services, processes, operations, and/or functions which may be administered by a provider to add value to packet transportation and processing. The service function forwarders 109 are responsible for forwarding traffic to one or more connected service functions 107 as well as handle traffic coming back from the service functions 107.

Each of the service function classifier 105, the service functions 107 and the service function forwarders 109 (also referred as nodes) are connected through a service function chain. In an embodiment, the service function chain may refer to a network service chaining that uses software-defined networking (SDN) capabilities to create a service chain of connected network services. The service function chain is utilised for various services for example, in mobile core, Wide Area Network (WAN) services, consumer services, in data centre networking and the like.

In an embodiment, the packet forwarding system 100 may be any computing device associated with users. For example, a laptop, a desktop computer, a Personal Digital Assistant (PDA), a notebook, a smartphone, a tablet and any other computing devices can be used as the packet forwarding system 100. A person skilled in the art would understand that the scope of the present disclosure may encompass any other packet forwarding system 100, which involves packet-based forwarding, not mentioned herein explicitly. A person skilled in the art would understand that Figure 1A is an exemplary embodiment and the packet forwarding system 100 may include any other units, not mentioned explicitly in the present disclosure.

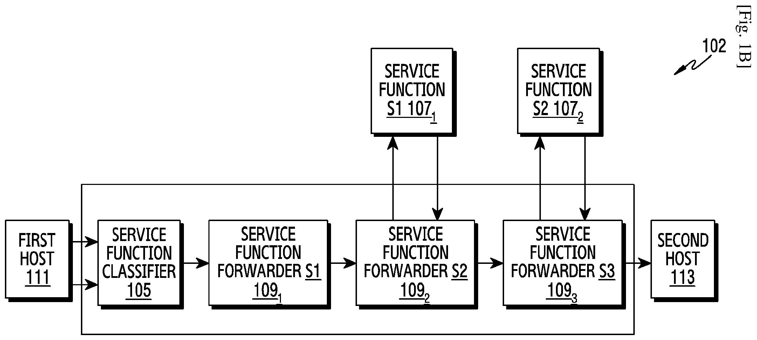

**Figure.1B** illustrates an exemplary representation of forwarding data packet in a network in accordance with some embodiments of the present disclosure. The exemplary embodiment includes a service function path 102 for forwarding data packets from a first host 111 to a second host 113. In an embodiment, the first host 111 and the second host 113 may be computing devices associated with a user. The service function path 102 includes service function classifier 105, service function forwarders 109 namely, a service function forwarder S1 109₁, a service function forwarder S2 109₂ and a service function forwarder S3 109₃ and a service function S1 (such as, for example a firewall) 107₁ and a service function S2 (such as, for example a load balancer) 107₂. In an embodiment, the service function path 102 is predefined and pre-stored in each of the plurality of service function forwarders 109. A person skilled in the art would understand that the Figure 1B is an exemplary embodiment and the service function path 102 may include any number of service function forwarders 109 and service functions 107.

Let us consider an exemplary scenario of transferring data between source host, for example from the first host 111 to a target host, for example the second host 113. In the exemplary scenario, the packet forwarding system 100 may receive the data packets from a host. Consider, the first host 111 is transmitting data packets to the second host 113. In such case, the data packets are received at service function classifier 105. In an embodiment, the service function classifier 105 performs packet classification for incoming/outgoing data and directs a matched traffic to service function paths. The packet classification refers to a process of categorizing data packets based on one or more predefined parameters such as, based on, same source and destination addresses. In an embodiment, the classification may be performed using policy driven technique. On receiving the data packets, the service function classifier 105 generates a modified source MAC address for the data packets by appending a service function chain identification number (SFC_ID) and a service function index value in a source Media Access Control (MAC) address associated with each of the data packets.

Thus, the source MAC address of each packet is modified at ingress of the service chain by the service function classifier 105. The service function classifier 105 transmits the data packets in the service function path 102 using the modified source MAC address. For instance, the data packets are transmitted to the service function forwarder S1 109₁ which decrements the service function index value by one count and forwards the data packets to the service function forwarder S2 109₂. The service function forwarder S2 109₂ decrements the service function index value by one count and forwards the data packets to the service function S1 (such as a firewall) 107₁.

The service function S1 (firewall) processes the data packets and returns the data packets to service function forwarder S2 109₂. The service function forwarder S2 109₂ transmits the processed data packets to the service function forwarder S3 109₃. On receiving the data packets, the service function forwarder S3 109₃ decrements the service function index value by one count and forwards to the service function S2 (such as a load balancer) 107₂. The service function S2 (such as a load balancer) 107₂ process the data packets and returns to service function forwarder S3 109₃. The service function forwarder S3 109₃ forwards the received data packets to the second host 113. In an embodiment, the data packets are forwarded to the second host 113 from a last node of the service function path. In current scenario, the service function forwarder S3 109₃ is the last node in the service function path.

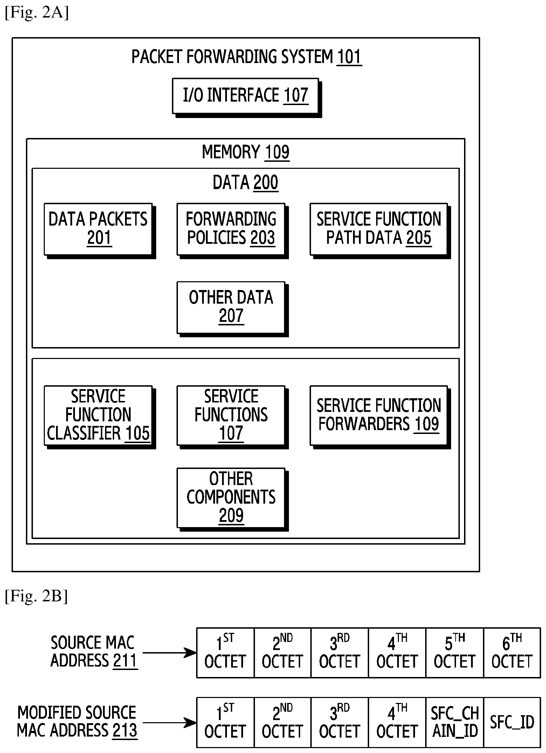

**Figure.2A** illustrates a detailed block diagram of a packet forwarding system in accordance with some embodiments of the present disclosure.

The packet forwarding system 100 may include the memory 103 which includes data 200 as described herein in detail. The data 200 may include, for example, address data 201, forwarding policies 203, service function path 205 and other data 207.

The address data 201 may include information about the source MAC address of each of the plurality of data packets. For example, the source MAC address for a data packet may include "35: a0: b1:00:57:c2". The source Mac address of the data packets are modified to include the service function chain identification number (SFC_ID) and the service function index value. Thus, the address data 201 may include the modified source MAC address of each data packets. The modified source MAC address is in a format of "fixed four octets>: SFC chain_ ID: SF_ID". The service function index value is updated based on movement in service function forwarders 109.

The forwarding policies 203 may include one or more policies for forwarding the data packets in the service function path 102. The one or more policies may match header fields of each data packet and modify and forward or forward and drop the data packets. For instance, consider a forwarding table at a router, as shown in Table 1 below. As shown, each entry contains a prefix and a name of an outgoing interface. For example, entry 1 indicates that a packet matching prefix 91.1.1.1/24 may be transmitted on interface *ethl.* In case, if the destination address of the incoming data packet is 171.1.1.2, the destination address may match prefix 171.1.0.0/16 in entry 2 as well as 171.1.1.0/24 in entry 3. Since prefix 171.1.1.0/24 is a longest matching prefix, the data packet is forwarded on the outgoing interface eth3.

**Table 1**

| **Policy Number** | **Prefix** | **Next-Hop** |
|---|---|---|
| 1 | 91.1.1.1/24 | *Eth1* |
| 2 | 171.1.0.0/16 | *Eth2* |
| 3 | 171.1.1.0/24 | *Eth3* |

The service function path data 205 may include the predefined service function path for the data packets to be forwarded. The service function path is pre-stored in each of the plurality of service function forwarders 109.

The other data 207 may store data, including temporary data and temporary files, generated for performing the various functions of the packet forwarding system 100.

In an embodiment, the data 200 in the memory 103 are processed by one or more components of the packet forwarding system 100. In an embodiment, the one or more components may be implemented as individually dedicated units.

In one implementation, the one or more components may include, but are not limited to the service function classifier 105, the service functions 107, the service function forwarders 109. The one or more components may also include other components 209 to perform various miscellaneous functionalities of the packet forwarding system 100. In an embodiment, the other components 209 may include a counter which may be used to count the service function index value in the source MAC address of each data packet.

The service function classifier 105 may receive the data packets through the I/O interface 101 from the first host 111. The service function classifier 105 may classify any incoming data packets and directs the matched traffic to service function paths. On receiving the data packets, the service function classifier 105 generates the modified source MAC address for each data packets. The modified source MAC address is generated by appending and modifying the service function chain identification number (SFC_ID) and the service function index value in the source Media Access Control (MAC) address of each of the data packets. In an embodiment, the SFC_ID and the service function index value is appended at ingress of the service function path. **Figure.2B** illustrates an exemplary source MAC address format in accordance with some embodiments of the present disclosure. Figure 2B illustrates a format of a source MAC address 211 of a data packet. The source MAC address 211 includes six octets. The service function classifier 105 may receive the source MAC address 211 and modify it by appending with the service function chain identification number (SFC_ID) and the service function index value. A format of modified source MAC address 213 is shown with four octets and an SDC_ID and service function index value.

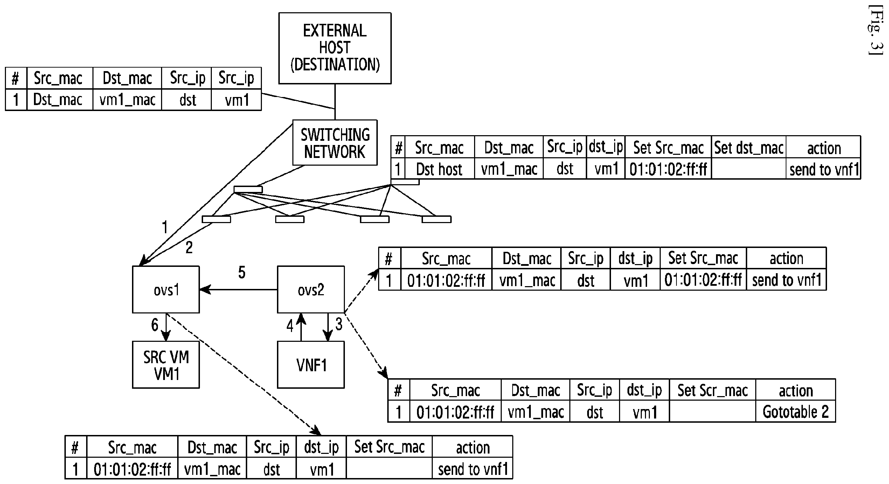

Returning to Figure.2A, on modifying the source MAC address, the service function classifier 105 forwards the data packets to one of the service function forwarder 109. The service function forwarder may be selected based on the predefined forwarding policies. In an embodiment, the service function classifier 105 may classify the data packets based on policy driven technique. For instance, the service function classifier 105 may extract header fields of the data packets to match against the forwarding policies 203. In case, the header fields match with the forwarding policies 203, the service function classifier 105 may forwarded the data packets in the network. In an embodiment, the service function classifier 105 may assign priorities for forwarding the data packets in the network. **Figure.3** illustrates an exemplary embodiment of assigning priorities for forwarding the data packets in the network. As shown in Figure 3, service function path for data packet 1 and data packet 5 reside on same Open vSwitch (OVS) port. In such case, to differentiate between the data packet 1 and data packet 5, a flow priority is assigned for both data packet 1 and data packet 5.

Returning to Figure 2A, the service functions 107 may include network service functions for processing the data packets. In an embodiment, the service functions 107 are those services, processes, operations, and/or functions which may be administered by a provider to add value to packet transportation and processing. For instance, the service functions 107 may include those services which add value, control quality of service, enhance privacy, and/or provide internal tracking mechanisms. Examples of the service functions 107 may include devices for deep packet inspection (DPI), firewalls, tracking packet sizes, encryption/decryption, latency improvements, network address translation, data caching, accounting, parental controls, call blocking, call forwarding, etc.

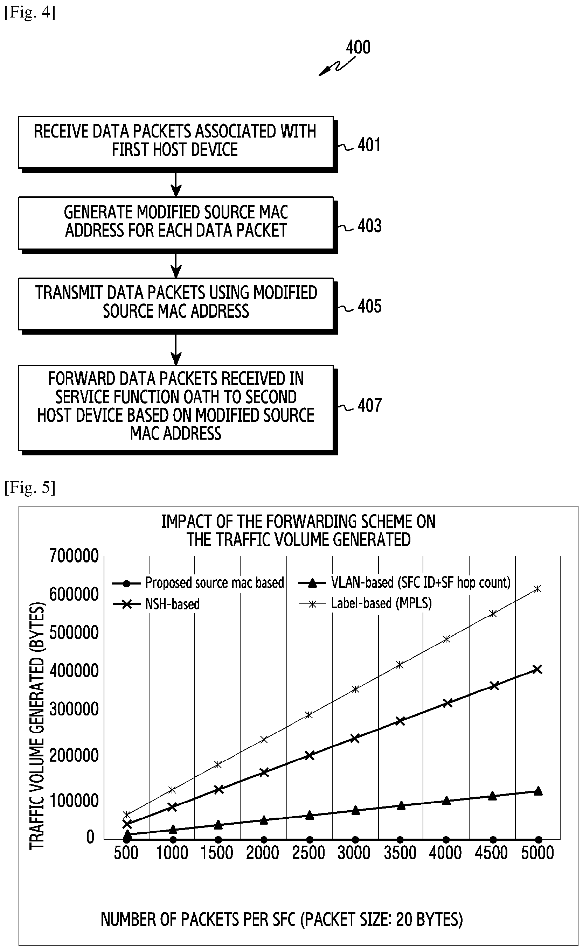

The service function forwarders 109 may be utilised to forward the data packets in the service function chain to destination. In an embodiment, any number of service function forwarders 109 may be present in the network depending on the type of network and configuration. Each of the service function forwarders 109 may comprise the predefined service function path. Each of the service function forwarders 109 may receive the data packets and decrement the service function index value by one count. For instance, consider a service function forwarder 109₁ receives the data packets with the modified source MAC address in format "fixed four octets>: SFC chain_ ID: SF_ID". The service function forwarder 109₁ may decrement the service function index value by one. Thus, the format may be "fixed four octets>: SFC chain_ ID: SFID-1". The data packets with the modified source MAC address is forwarded to provide to the second host 113, which is destination device. **Figure.5** illustrates an exemplary graph depicting comparison between different packet forwarding approaches in accordance with some embodiments of the present disclosure. The graph discloses effect of additional headers on traffic volume size, which results in increased traffic volume.

**Figure.4** illustrates a flowchart showing a method for forwarding data packets in a service function path in accordance with some embodiments of present disclosure.

The method 400 includes one or more blocks for forwarding data packets in a service function path. The method 400 may be described in the general context of computer executable instructions. Computer executable instructions can include routines, programs, objects, components, data structures, procedures, modules, and functions, which perform particular functions or implement particular abstract data types.

The order in which the method 400 is described is not intended to be construed as a limitation, and any number of the described method blocks can be combined in any order to implement the method described in Figure 4. Additionally, individual blocks may be deleted from the method without departing from the scope of the subject matter described herein. Furthermore, the method can be implemented in any suitable hardware, software, firmware, or combination thereof.

At block 401, the data packets associated with the first host device 111 is received by the service function classifier 105.

At block 403, the modified source MAC address is generated by the service function classifier 105 for each of the data packets. The modified source MAC address is generated by appending the service function chain identification number (SFC_ID) and the service function index value in the MAC address associated with each of the data packets.

At block 405, the data packets in the service function path are transmitted by the service function classifier 105 using the modified source MAC address. In an embodiment each component in the service function path are connected through the service function chain.

At block 407, the data packets received at the service function path is forwarded by the service function forwarders 109 to the second host 113 based on the modified source MAC address.

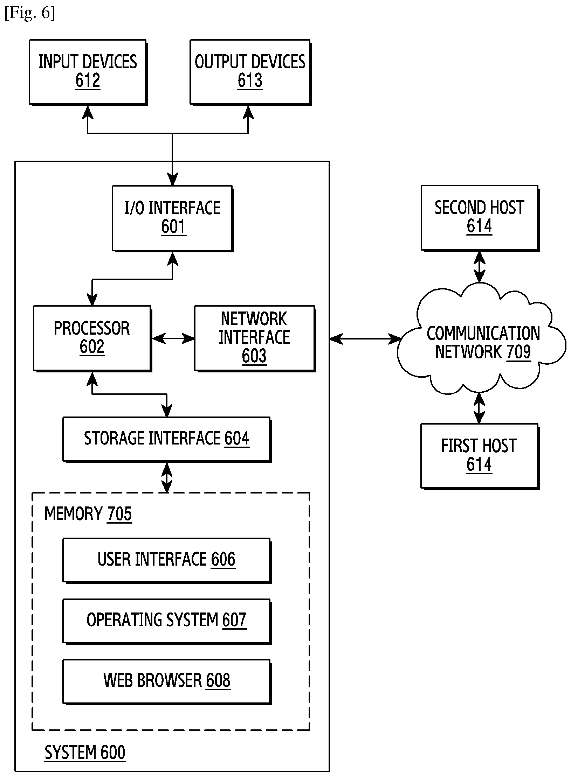

**Figure 6** illustrates a block diagram of an exemplary system 600 for implementing embodiments consistent with the present disclosure. The system 600 may include a central processing unit processor 602 (also known CPU 602). The processor 602 may include at least one data processor for forwarding data packets in a service function path of a network. The processor 602 may include specialized processing units such as, integrated system (bus) controllers, memory management control units, floating point units, graphics processing units, digital signal processing units, etc.

The processor 602 may be used in communication with one or more I/O devices (not shown) via I/O interface 601. The I/O interface 601 may employ communication protocols/methods such as, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like),5G, Vehicular communication (V2X), device to device communication network, IOT network, or NB-IOT network; but are not limited as such.

Using the I/O interface 601, the system 600 may communicate with one or more I/O devices. The input device may be an antenna, keyboard, mouse, joystick, (infrared) remote control, camera, card reader, fax machine, dongle, biometric reader, microphone, touch screen, touchpad, trackball, stylus, scanner, storage device, transceiver, or video device/source; but are not limited as such. The output device may be a printer, fax machine, video display (e.g., cathode ray tube (CRT), liquid crystal display (LCD), light-emitting diode (LED), plasma, Plasma display panel (PDP), Organic light-emitting diode display (OLED) or the like), or audio speaker, but are not limited as such.

The processor 602 may be used in communication with the communication network 609 via a network interface 603. The network interface 603 may communicate with the communication network 609. The network interface 603 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 609 may include, without limitation, a direct interconnection, local area network (LAN), wide area network (WAN), wireless network (e.g., using Wireless Application Protocol), the Internet, etc. Using the network interface 603 and the communication network 609, the system 600 may communicate with a first host device 614 and a second host device 615. The network interface 603 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 609 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, LTE network, 5G wireless network, vehicular communication network, IOT network, NB-IOT network, Device to Device communication (D2D) network and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Furthermore, the first network and the second network may include a variety of network devices, including routers, bridges, servers, computing devices, storage devices, etc.

In some embodiments, the processor 602 may be used in communication with a memory 605 (e.g., RAM, ROM, etc. not shown in figure 6) via a storage interface 604. The storage interface 604 may connect to memory 605 by means of memory drives or removable disc drives but are not limited as such. This connection between storage interface 604 and memory 605 employs protocols such as serial advanced technology attachment (SATA), Integrated Drive Electronics (IDE), IEEE-1394, Universal Serial Bus (USB), fiber channel, or Small Computer Systems Interface (SCSI), but are not limited as such. The memory drives may include a drum, magnetic disc drive, magneto-optical drive, optical drive, Redundant Array of Independent Discs (RAID), solid-state memory devices, or solid-state drives, but are not limited as such.

The memory 605 may store a collection of program or database components including user interface 606 or an operating system 607 but are not limited as such. In some embodiments, user device 400 may store user data or application data, such as general data, variables or records, but are not limited as such., as described in this disclosure. Such databases may be implemented as fault-tolerant, relational, scalable, secure databases such as Oracle or Sybase.

The operating system 607 may facilitate resource management and operation of the user equipment 400. Some examples of operating systems include APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROID^{™}, BLACKBERRY^{R} OS, or the like, but are not limited as such.

In some embodiments, the system 600 may implement a web browser 608 stored program component. The web browser 608 may be a hypertext viewing application such as MICROSOFT^{®} INTERNET EXPLORER^{™}, GOOGLE^{®} CHROME^{™}, MOZILLA^{®} FIREFOX^{™}, or APPLE^{®} SAFARI^{™}, but are not limited as such. Secure web browsing may be provided using Secure Hypertext Transport Protocol (HTTPS), Secure Sockets Layer (SSL), or Transport Layer Security (TLS), but are not limited as such. Web browsers 408 may utilize facilities such as AJAX^{™}, DHTML^{™}, ADOBE^{®} FLASH^{™}, JAVASCRIPT^{™}, JAVA^{™}, or Application Programming Interfaces (APIs), but are not limited as such. In some embodiments, the system 600 may implement a mail server stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{®}, .NET^{™}, CGI SCRIPTS^{™}, JAVA^{™}, JAVASCRIPT^{™}, PERL^{™}, PHP^{™}, PYTHON^{™}, or WEBOBJECTS^{™}, but are not limited as such. The mail server may utilize communication protocols such as Internet Message Access Protocol (IMAP), Messaging Application Programming Interface (MAPI), MICROSOFT^{®} exchange, Post Office Protocol (POP), Simple Mail Transfer Protocol (SMTP), or the like, but are not limited as such. In some embodiments, the user equipment 400 may implement a mail client stored program component. The mail client may be a mail viewing application, such as APPLE^{®} MAIL^{™}, MICROSOFT^{®} ENTOURAGE^{™}, MICROSOFT^{®} OUTLOOK^{™}, or MOZILLA^{®} THUNDERBIRD^{™}, but are not limited as such.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media presently or in the future.

An embodiment of present disclosure eliminates need of special headers such as, SFC header and VLAN header for forwarding data packets on the SFP. Thus, reducing the packet size and ultimately traffic volume.

An embodiment of the present disclosure provides a pro-active approach since forwarding rules for SFC can be reused for any incoming flow.

In an embodiment of the present disclosure the data packets are classified only once in classifier. Thus, reducing processing and complexities.

An embodiment of the present disclosure provides loop-free forwarding of the data packets on the SFP.

An embodiment of the present disclosure provides reduced number of forwarding rules.

The described operations may be implemented as a method, system, or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor contains at least one microprocessor and a processor capable of processing and executing the queries. A non-transitory computer readable medium may include media such as magnetic storage medium, optical storage, or volatile and non-volatile memory devices, but are not limited as such.

A magnetic storage medium may utilize devices such as hard disk drives, floppy disks, tape, or the like, but are not limited as such. An optical storage device may utilize devices such as CD-ROMs, DVDs, optical disks, or the like, but are not limited as such. Volatile and non-volatile memory devices may utilize devices such as EEPROMs, ROMs, PROMs, RAMs, DRAMs, SRAMs, Flash Memory, firmware, programmable logic, or the like, but are not limited as such.

Furthermore, non-transitory computer-readable media include all computer-readable media except for a transitory. The code implementing the described operations may further be implemented in hardware logic such as an integrated circuit chip, Programmable Gate Array (PGA), or Application Specific Integrated Circuit (ASIC), but are not limited as such.

Still further, the code implementing the described operations may be implemented in "transmission signals", where transmission signals may propagate through space or through a transmission media, such as, an optical fiber or copper wire, but are not limited as such. The transmission signals in which the code or logic is encoded may further include a wireless signal, satellite transmission, radio waves, infrared signals, or Bluetooth, but are not limited as such. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" includes non-transitory computer readable medium, hardware logic, and/or transmission signals in which code may be implemented. A device in which the code implementing the described embodiments of operations is encoded may include a computer readable medium or hardware logic. Of course, those skilled in the art will recognize that many modifications may be made to this configuration without departing from the scope of the invention, and that the article of manufacture may include suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise. The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required or are necessary. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features.

The illustrated operations of Figure 6 show certain events occurring in a certain order. In alternative embodiments, certain operations may be performed in a different order, modified or removed. Moreover, steps may be added to the above described logic and still conform to the described embodiments. Furthermore, operations described herein may occur sequentially or certain operations may be processed in parallel. Yet furthermore, operations may be performed by a single processing unit or by distributed processing units.

Finally, the language used in the specification has been principally selected for readability and instructional purposes, and the language may or may not have been selected to delineate or circumscribe the inventive subject matter. The language is therefore intended to show that the scope of the invention is not to be limited by this detailed description, but rather by any claims issued on an application based here on. Accordingly, the disclosure of the embodiments of the invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

### REFERRAL NUMERALS:

| **Reference number** | **Description** |
|---|---|
| 100 | Packet forwarding system |
| 101 | I/O interface |
| 102 | Service function path |
| 103 | Memory |
| 105 | Service function classifier |
| 107 | Service functions |
| 109 | Service function forwarders |
| 111 | First host |
| 113 | Second host |
| 200 | Data |
| 201 | Address data |
| 203 | Forwarding policies |
| 205 | Service function path data |
| 207 | Other data |
| 209 | Other data |
| 211 | Source MAC address |
| 213 | Modified source MAC address |

## Claims

1. A method for operating a packet forwarding system in a wireless communication system, the method performed by a packet forwarding system including a service function classifier (105), a plurality of service functions (107), a plurality of service function forwarders (109), the method comprising:
receiving, by the service function classifier (105), data packets associated with a first host device (111) destined to a second host device (113);
generating, by the service function classifier (105), a modified source media access control, MAC, address for each of the received data packets by appending a service function chain identification number, SFC ID, and a service function index value, SF ID, in a source MAC address associated with each of the data packets;
transmitting, by the service function classifier (105) to a first one of the plurality of service function forwarders (109), the data packets in a service function path (102) using the modified source MAC address, wherein the service function classifier (105), the plurality of service functions (107) and the plurality of service function forwarders (109) are included in the service function path (102), each node (105, 107, 109) in the service function path (102) are connected through a service function chain, wherein the service function path (102) refers to a predefined logical path for forwarding data packets from the first host device (111) to the second host device (113); and
upon receiving the data packets by a service function forwarder (109) of the plurality of service function forwarders, forwarding the data packets to a next service function forwarder (109) of the plurality of service function forwarders, or to a service function (107) of the plurality of service functions or to the second host device (113); and
wherein forwarding, by a service function forwarder (109) of the plurality of service function forwarders the data packets, comprises performing a decrement of the SF ID of the modified source MAC address in the data packet by one count when the data packet is received from another service function forwarder (109) of the service function path (102),
wherein the service function path (102) comprises a first path part from the another service function forwarder (109) to the service function forwarder (109) and a second path part from the service function forwarder (109) to the next service function forwarder (109), to the service function (107) or to the second host device (113), wherein the first path part and the second path part are consecutive.

2. The method of claim 1, wherein the modified MAC address has a format of: fixed four octets of the source MAC, SFC_ID, SF_ID.

3. The method of claim 1, wherein the service function path (102) is predefined and pre-stored in each of the plurality of service function forwarders (109).

4. The method of claim 1, further comprising assigning priorities for forwarding the data packets in the network.

5. The method of claim 1, wherein the data packets are forwarded to the second host device (113) from a last one of the plurality of service function forwarders (109).

6. A data packet forwarding system including a service function classifier (105), a plurality of service functions (107), a plurality of service function forwarders (109), the service function classifier (105) comprising:
a memory (103);
wherein the service function classifier (105) is configured for:
receiving data packets associated with a first host device (111) destined to a second host device (113);
generating a modified source media access control, MAC, address for each of the received data packet by appending a service function chain identification number, SFC ID, and a service function index value, SF ID, in a source MAC address associated with each of the data packets s; and
transmitting, by the service function classifier (105) to a first one of the plurality of service function forwarders (109), the data packets in a service function path (102) using the modified source MAC address, wherein the service function classifier (105), the plurality of service functions (107) and the plurality of service function forwarders (109) are included in the service path (102), each node (105, 107, 109) in the service function path (102) are connected through a service function chain, wherein the service function path (102) refers to a predefined logical path for forwarding data packets from the first host device (111) to the second host device (113); and
wherein upon receiving the data packets by a service function forwarder (109) of the plurality of service function forwarders, the service function forwarder is configured to forward the data packets to a next service function forwarder (109) of the plurality of service function forwarders, or to a service function (107) of the plurality of service functions or to the second host device (113); and
wherein, forwarding by a service function forwarder (109) of the plurality of service function forwarders the data packets, comprises performing a decrement of the SF ID of the modified source MAC address in the data packet by one count when the data packet is received from another service function forwarder (109) of the service function path (102),
wherein the service function path (102) comprises a first path part from the another service function forwarder (109) to the service function forwarder (109) and a second path part from the service function forwarder (109) to the next service function forwarder (109), to the service function (107) or to the second host device (113), wherein the first path part and the second path part are consecutive.

7. The service function classifier (105) of claim 6, wherein the service function classifier (105) generates the modified MAC address according to a format of: fixed four octets of the source MAC, SFC_ID, SF_ID.

8. The service function classifier (105) of claim 6, wherein the service function path (102) is predefined and pre-stored in each of the plurality of service function forwarders (109).

9. The service function classifier (105) of claim 6, wherein the service function classifier (105) is further configured for assigning priorities for forwarding the data packets in the network.

10. The service function classifier (105) of claim 6, wherein the data packets are forwarded to the second host device (113) from a last one of the plurality of service function forwarders (109).

## Patentansprüche

1. Verfahren zum Betreiben eines Paket-Weiterleitungssystems in einem drahtlosen Kommunikationssystem, wobei das Verfahren von einem Paket-Weiterleitungssystem durchgeführt wird, das eine Dienstfunktions-Klassifizierungseinrichtung (105), eine Vielzahl von Dienstfunktionen (107) und eine Vielzahl von Dienstfunktions-Weiterleitungseinrichtungen (109) umfasst, wobei das Verfahren umfasst:
Empfangen von Datenpaketen, die einer ersten Host-Vorrichtung (111) zugeordnet sind, die für eine zweite Host-Vorrichtung (113) bestimmt sind, durch die Dienstfunktions-Klassifizierungseinrichtung (105);
Erzeugen, durch die Dienstfunktions-Klassifizierungseinrichtung (105), einer modifizierten Quell-Mediumzugriffssteuerungs-, MAC,-Adresse für jedes der empfangenen Datenpakete durch Anhängen einer Dienstfunktionsketten-Identifikationsnummer, SFC ID, und eines Dienstfunktionsindexwertes, SF ID, in einer jedem der Datenpakete zugeordneten Quell-MAC-Adresse;
Übertragen der Datenpakete in einem Dienstfunktionspfad (102) unter Verwendung der modifizierten Quell-MAC-Adresse durch die Dienstfunktions-Klassifizierungseinrichtung (105) an eine erste der Vielzahl von Dienstfunktions-Weiterleitungseinrichtungen (109), wobei die Dienstfunktions-Klassifizierungseinrichtung (105), die Vielzahl von Dienstfunktionen (107) und die Vielzahl von Dienstfunktions-Weiterleitungseinrichtungen (109) in dem Dienstfunktionspfad (102) enthalten sind, wobei jeder Knoten (105, 107, 109) in dem Dienstfunktionspfad (102) durch eine Dienstfunktionskette verbunden ist, wobei sich der Dienstfunktionspfad (102) auf einen vordefinierten logischen Pfad zum Weiterleiten von Datenpaketen von der ersten Host-Vorrichtung (111) an die zweite Host-Vorrichtung (113) bezieht; und
beim Empfangen der Datenpakete durch eine Dienstfunktions-Weiterleitungseinrichtung (109) der Vielzahl von Dienstfunktions-Weiterleitungseinrichtungen, Weiterleiten der Datenpakete an eine nächste Dienstfunktions-Weiterleitungseinrichtung (109) der Vielzahl von Dienstfunktions-Weiterleitungseinrichtungen oder an eine Dienstfunktion (107) der Vielzahl von Dienstfunktionen oder an die zweite Host-Vorrichtung (113); und
wobei das Weiterleiten der Datenpakete durch eine Dienstfunktions-Weiterleitungseinrichtung (109) aus der Vielzahl von Dienstfunktions-Weiterleitungseinrichtungen das Durchführen einer Dekrementierung der SF ID der modifizierten Quell-MAC-Adresse in dem Datenpaket um einen Zählwert umfasst, wenn das Datenpaket von einer anderen Dienstfunktions-Weiterleitungseinrichtung (109) des Dienstfunktionspfades (102) empfangen wird.
wobei der Dienstfunktionspfad (102) einen ersten Pfadteil von der anderen Dienstfunktions-Weiterleitungseinrichtung (109) zu der Dienstfunktions-Weiterleitungseinrichtung (109) und einen zweiten Pfadteil von der Dienstfunktions-Weiterleitungseinrichtung (109) zu der nächsten Dienstfunktions-Weiterleitungseinrichtung (109), zu der Dienstfunktion (107) oder zu der zweiten Host-Vorrichtung (113) umfasst, wobei der erste Pfadteil und der zweite Pfadteil aufeinanderfolgend sind.

2. Verfahren nach Anspruch 1, wobei die modifizierte MAC-Adresse das folgende Format aufweist: feste vier Oktette der Quell-MAC, SFC_ID, SF_ID.

3. Verfahren nach Anspruch 1, wobei der Dienstfunktionspfad (102) in jeder der Vielzahl von Dienstfunktions-Weiterleitungseinrichtungen (109) vordefiniert und vorgespeichert ist.

4. Verfahren nach Anspruch 1, ferner umfassend das Zuweisen von Prioritäten für die Weiterleitung der Datenpakete im Netzwerk.

5. Verfahren nach Anspruch 1, wobei die Datenpakete von einer letzten der Vielzahl von Dienstfunktions-Weiterleitungseinrichtungen (109) an die zweite Host-Vorrichtung (113) weitergeleitet werden.

6. Datenpaket-Weiterleitungssystem, das eine Dienstfunktions-Klassifizierungseinrichtung (105), eine Vielzahl von Dienstfunktionen (107) und eine Vielzahl von Dienstfunktions-Weiterleitungseinrichtungen (109) enthält, wobei die Dienstfunktions-Klassifizierungseinrichtung (105) Folgendes umfasst:
einen Speicher (103);
wobei die Dienstfunktions-Klassifizierungseinrichtung (105) konfiguriert ist zum:
Empfangen von Datenpaketen, die einer ersten Host-Vorrichtung (111) zugeordnet sind, die für eine zweite Host-Vorrichtung (113) bestimmt sind;
Erzeugen einer modifizierten Quell-Mediumzugriffssteuerungs-, MAC,-Adresse für jedes des empfangenen Datenpakets durch Anhängen einer Dienstfunktionsketten-Identifikationsnummer, SFC ID, und eines Dienstfunktionsindexwertes, SF ID, in einer jedem der Datenpakete zugeordneten Quell-MAC-Adresse;
Übertragen der Datenpakete in einem Dienstfunktionspfad (102) unter Verwendung der modifizierten Quell-MAC-Adresse durch die Dienstfunktions-Klassifizierungseinrichtung (105) an eine erste der Vielzahl von Dienstfunktions-Weiterleitungseinrichtungen (109), wobei die Dienstfunktions-Klassifizierungseinrichtung (105), die Vielzahl von Dienstfunktionen (107) und die Vielzahl von Dienstfunktions-Weiterleitungseinrichtungen (109) in dem Dienstfunktionspfad (102) enthalten sind, wobei jeder Knoten (105, 107, 109) in dem Dienstfunktionspfad (102) durch eine Dienstfunktionskette verbunden ist, wobei sich der Dienstfunktionspfad (102) auf einen vordefinierten logischen Pfad zum Weiterleiten von Datenpaketen von der ersten Host-Vorrichtung (111) zu der zweiten Host-Vorrichtung (113) bezieht; und
wobei beim Empfangen der Datenpakete durch eine Dienstfunktions-Weiterleitungseinrichtung (109) der Vielzahl von Dienstfunktions-Weiterleitungseinrichtungen die Dienstfunktions-Weiterleitungseinrichtung konfiguriert ist, um die Datenpakete an eine nächste Dienstfunktions-Weiterleitungseinrichtung (109) der Vielzahl von Dienstfunktions-Weiterleitungseinrichtungen oder an eine Dienstfunktion (107) der Vielzahl von Dienstfunktionen oder an die zweite Host-Vorrichtung (113) weiterzuleiten; und
wobei das Weiterleiten der Datenpakete durch eine Dienstfunktions-Weiterleitungseinrichtung (109) der Vielzahl von Dienstfunktions-Weiterleitungseinrichtungen die Durchführung einer Dekrementierung der SF-ID der modifizierten Quell-MAC-Adresse in dem Datenpaket um einen Zählwert umfasst, wenn das Datenpaket von einer anderen Dienstfunktions-Weiterleitungseinrichtung (109) des Dienstfunktionspfades (102) empfangen wird,
wobei der Dienstfunktionspfad (102) einen ersten Pfadteil von der anderen Dienstfunktions-Weiterleitungseinrichtung (109) zu der Dienstfunktions-Weiterleitungseinrichtung (109) und einen zweiten Pfadteil von der Dienstfunktions-Weiterleitungseinrichtung (109) zu der nächsten Dienstfunktions-Weiterleitungseinrichtung (109), zu der Dienstfunktion (107) oder zu der zweiten Host-Vorrichtung (113) umfasst, wobei der erste Pfadteil und der zweite Pfadteil aufeinanderfolgend sind.

7. Dienstfunktions-Klassifizierungseinrichtung (105) nach Anspruch 6, wobei die Dienstfunktions-Klassifizierungseinrichtung (105) die modifizierte MAC-Adresse gemäß einem Format von Folgendem erzeugt: feste vier Oktette der Quell-MAC, SFC_ID, SF_ID.

8. Dienstfunktions-Klassifizierungseinrichtung (105) nach Anspruch 6, wobei der Dienstfunktionspfad (102) vordefiniert und in jeder der Vielzahl von Dienstfunktions-Weiterleitungseinrichtungen (109) vorgespeichert ist.

9. Dienstfunktions-Klassifizierungseinrichtung (105) nach Anspruch 6, wobei die Dienstfunktions-Klassifizierungseinrichtung (105) ferner für die Zuweisung von Prioritäten für die Weiterleitung der Datenpakete im Netzwerk konfiguriert ist.

10. Dienstfunktions-Klassifizierungseinrichtung (105) nach Anspruch 6, wobei die Datenpakete von einer letzten der Vielzahl von Dienstfunktions-Weiterleitungseinrichtungen (109) an die zweite Host-Vorrichtung (113) weitergeleitet werden.

## Revendications

1. Procédé d'exploitation d'un système de transfert de paquets dans un système de communication sans fil, le procédé étant exécuté par un système de transfert de paquets comportant un classificateur de fonctions de service (105), une pluralité de fonctions de service (107), une pluralité de dispositifs de transfert de fonctions de service (109), le procédé comprenant :
recevoir, par le classificateur de fonctions de service (105), des paquets de données associés à un premier dispositif hôte (111) destinés à un deuxième dispositif hôte (113) ;
générer, par le classificateur de fonctions de service (105), pour chacun des paquets de données reçus, une adresse de commande d'accès au support, MAC, de source modifiée en ajoutant un numéro d'identification de chaîne de fonctions de service, ID SFC, et une valeur d'index de fonctions de service, ID SF, à l'adresse MAC source associée à chacun des paquets de données ;
transmettre, par le classificateur de fonctions de service (105) à un premier de la pluralité de dispositifs de transfert de fonctions de service (109), les paquets de données dans un trajet de fonctions de service (102) en utilisant l'adresse MAC de source modifiée, dans lequel le classificateur de fonctions de service (105), la pluralité de fonctions de service (107) et la pluralité de dispositifs de transfert de fonctions de service (109) sont inclus dans le trajet de fonctions de service (102), chaque noeud (105, 107, 109) dans le trajet de fonctions de service (102) est connecté par une chaîne de fonctions de service, dans lequel le trajet de fonctions de service (102) se réfère à un trajet logique prédéfini pour transmettre des paquets de données du premier dispositif hôte (111) au deuxième dispositif hôte (113) ; et
lors de la réception des paquets de données par un dispositif de transfert de fonctions de service (109) de la pluralité de dispositifs de transfert de fonctions de service, transférer les paquets de données à un dispositif de transfert de fonctions de service suivant (109) de la pluralité de dispositifs de transfert de fonctions de service, ou à une fonction de service (107) de la pluralité de fonctions de service ou au deuxième dispositif hôte (113) ; et
dans lequel le transfert, par un dispositif de transfert de fonctions de service (109) de la pluralité de dispositifs de transfert de fonctions de service, des paquets de données, comprend l'exécution d'une décrémentation de l'ID SF de l'adresse MAC de source modifiée dans le paquet de données par un compte lorsque le paquet de données est reçu depuis un autre dispositif de transfert de fonctions de service (109) du trajet de fonctions de service (102),
dans lequel le trajet de fonctions de service (102) comprend une première partie de trajet à partir de l'autre dispositif de transfert de fonctions de service (109) vers le dispositif de transfert de fonctions de service (109) et une deuxième partie de trajet à partir du dispositif de transfert de fonctions de service (109) vers le dispositif de trajet de fonctions de service suivant (109), vers la fonction de service (107) ou vers le deuxième dispositif hôte (113), dans lequel la première partie de trajet et la deuxième partie de trajet sont consécutives.

2. Procédé de la revendication 1, dans lequel l'adresse MAC modifiée a un format de : quatre octets fixes du MAC source, ID_SFC, ID_SF.

3. Procédé de la revendication 1, dans lequel le trajet de fonctions de service (102) est prédéfini et préenregistré dans chacun de la pluralité de dispositifs de transfert de fonctions de service (109).

4. Procédé de la revendication 1, comprenant en outre l'attribution de priorités pour le transfert des paquets de données dans le réseau.

5. Procédé de la revendication 1, dans lequel les paquets de données sont transferts vers le deuxième dispositif hôte (113) à partir d'un dernier de la pluralité de dispositifs de transfert de fonctions de service (109).

6. Système de transfert de paquets de données comportant un classificateur de fonctions de service (105), une pluralité de fonctions de service (107), une pluralité de dispositifs de transfert de fonctions de service (109), le classificateur de fonctions de service (105) comprenant :
une mémoire (103) ;
dans lequel le classificateur de fonctions de service (105) est configuré pour :
recevoir des paquets de données associés à un premier dispositif hôte (111) destinés à un deuxième dispositif hôte (113) ;
générer une adresse de commande d'accès au support, MAC, de source modifiée en ajoutant un numéro d'identification de chaîne de fonctions de service, ID SFC, et une valeur d'index de fonctions de service, ID SF, à l'adresse MAC source associée à chacun des paquets de données ; et
transmettre, par le classificateur de fonctions de service (105) à un premier de la pluralité de dispositifs de transfert de fonctions de service (109), les paquets de données dans un trajet de fonctions de service (102) en utilisant l'adresse MAC de source modifiée, dans lequel le classificateur de fonctions de service (105), la pluralité de fonctions de service (107) et la pluralité de dispositifs de transfert de fonctions de service (109) sont inclus dans le trajet de fonctions de service (102), chaque noeud (105, 107, 109) dans le trajet de fonctions de service (102) est connecté par une chaîne de fonctions de service, dans lequel le trajet de fonctions de service (102) se réfère à un trajet logique prédéfini pour transmettre des paquets de données du premier dispositif hôte (111) au deuxième dispositif hôte (113) ; et
dans lequel, lors de la réception des paquets de données par un dispositif de transfert de fonctions de service (109) de la pluralité de dispositifs de transfert de fonctions de service, le dispositif de transfert de fonctions de service est configuré pour transférer les paquets de données à un dispositif de transfert de fonctions de service suivant (109) de la pluralité de dispositifs de transfert de fonctions de service, ou à une fonction de service (107) de la pluralité de fonctions de service ou au deuxième dispositif hôte (113) ; et
dans lequel le transfert, par un dispositif de transfert de fonctions de service (109) de la pluralité de dispositifs de transfert de fonctions de service, des paquets de données, comprend l'exécution d'une décrémentation de l'ID SF de l'adresse MAC de source modifiée dans le paquet de données par un compte lorsque le paquet de données est reçu depuis un autre dispositif de transfert de fonctions de service (109) du trajet de fonctions de service (102),
dans lequel le trajet de fonctions de service (102) comprend une première partie de trajet à partir de l'autre dispositif de transfert de fonctions de service (109) vers le dispositif de transfert de fonctions de service (109) et une deuxième partie de trajet à partir du dispositif de transfert de fonctions de service (109) vers le dispositif de trajet de fonctions de service suivant (109), vers la fonction de service (107) ou vers le deuxième dispositif hôte (113), dans lequel la première partie de trajet et la deuxième partie de trajet sont consécutives.

7. Classificateur de fonctions de service (105) de la revendication 6, dans lequel le classificateur de fonctions de service (105) génère l'adresse MAC modifiée selon un format de : quatre octets fixes du MAC source, ID_SFC, ID_SF.

8. Classificateur de fonctions de service (105) de la revendication 6, dans lequel le trajet de fonctions de service (102) est prédéfini et préenregistré dans chacun de la pluralité de dispositifs de transfert de fonctions de service (109).

9. Classificateur de fonctions de service (105) de la revendication 6, dans lequel le classificateur de fonctions de service (105) est en outre configuré pour attribuer des priorités pour le transfert des paquets de données dans le réseau.

10. Classificateur de fonctions de service (105) de la revendication 6, dans lequel les paquets de données sont transférés au deuxième dispositif hôte (113) à partir d'un dernier de la pluralité de dispositifs de transfert de fonctions de service (109).
